# EUROPEAN PATENT APPLICATION

(11) **EP 3 962 171 A1**
(43) Date of publication of application: **02.03.2022**
(21) Application number: 21194150.5
(22) Date of filing: 31.08.2021
(51) Int. Cl.: H04W 36/00, H04W 28/02

(54) **USER EQUIPMENT CENTRIC WIDE AREA OPTIMIZATION METHOD AND SYSTEM THEREOF**

(30) Priority: 31.08.2020 US 202063072567 P
(71) Applicant: Sterlite Technologies Limited, Haryana 122002 (IN)
(72) Inventor: PAREKH, Shyam, California, 94563 (US); RAVINDRAN, Ravishankar, California, 94582 (US); TANG, Kevin, California, 94568 (US)
(74) Representative: Hepworth Browne

(57) **Abstract**

A traffic management method performed by a radio access network (RAN) controller in a wireless communication system includes monitoring one or more quality of service (Quality of service (QoS)) values of one or more applications at the UE, providing recommendation to the UE for traffic management based on the monitored Quality of service (QoS) values, one or more UE requirements and one or more handover parameters of the serving cell, performing recommendation for handover of the UE and adjusting Quality of service (QoS) values of the one or more applications at the UE.

## Description

### TECHNICAL FIELD

Embodiments of the present disclosure relate to a field of a wireless communication system. And more particularly, relates to a User Equipment (UE) centric wide area optimization (WAO) method for traffic management and system thereof.

This application claims the benefit of US Provisional Application Number 63,072/567 titled "user equipment centric wide area optimization method and system thereof" filed by the applicant on 31/08/2020, which is incorporated herein by reference in its entirety.

### Background Art

In the present scenario, wireless communications technology has a significant role in making modern network infrastructure. The wireless communications technology allows exchange of information over significant distances and refers to all types of voice, data and video transmission. With an increasing demand in the usage of wireless communications technology, fifth generation (5G) wireless communication technology and fourth generation (4G) wireless communication technology have become a hot spot in the modern network industry. In addition, the 5G wireless communication technology and the 4G wireless communication technology supports a plurality of needs. Further, the plurality of needs includes support for higher speed, high bandwidth access, lower latency, organizing network, and highly reliable information interaction. Furthermore, the 5G wireless communication technology supports a variety of vertical industry applications for vehicle networking, emergency communications, Internet of Things (IoT), remotely controlled robots, heterogeneous sensor connections, industrial Internet, and the like. A traffic management implementation in a wireless network provides a higher network performance and decrease in number of unsatisfied users. The traffic management is supposed to be achieved by reducing highly loaded cells in the wireless network. The traffic management usually monitors cell load values and tries to distribute a traffic of highly loaded cells among less loaded neighbouring cells in the wireless network. The traffic management technique focuses on cell centric customization/optimization, which provides a need for customization/optimization for a UE associated with a specific user and the UE associated with a specific user group priority. Some of the prior art references are given below:

WO2017018638A1 discloses a method which involves determining a redistribution target corresponding to a different frequency and comprising a cell within which the mobile device can camp on in idle mode. The redistribution factor corresponding to a redistribution target is identified and to move to one of the redistribution targets is determined based on the redistribution factor. The redistribution factor comprises determining whether a redistribution factor is specified for a first cell corresponding to that redistribution target is identified.

US20090163223A1 discloses a method which involves measuring periodically load capacity of cells overlapping partly within adjacent cells, where a user terminal resides in an overlapping area of the cells. Traffic connections e.g., voice over internet protocol (IP), of the user terminal are differentiated within each cell to two traffic classes based on delay sensitivity of the connections. One of the traffic classes is triggered with lower delay sensitivity before the traffic class is provided with higher delay sensitivity to handle the connection of the user terminal.

While the prior arts cover various approaches for traffic management methods and systems for traffic management of specific user groups or closes user groups by handoff to different cells. In addition, adjusting load within a cell is based on the Quality of service (QoS) classes. Thus, they are only for cell centric customization/optimization. No user/user group priority is utilized for optimization. However, there are no significant considerations to provide QoE aware traffic management method which leverages wide area visibility of RIC across all cells by either performing dynamic handover to a cell within the area or triggering Quality of service (QoS) nudging within the cell, without A3 trigger. Thus, there is an urgent need for a technical solution that overcomes the above stated limitations in the prior arts.

### SUMMARY OF THE DISCLOSURE

Embodiments of the present disclosure provides a user equipment centric wide area optimization method and a wireless communication system.

According to a first aspect of the present disclosure, a traffic management method by a radio access network (RAN) controller performing in a wireless communication system. The traffic management method improves quality of service (QoS) or quality of experience (QoE) of a specific user or a specific/priority user group associated with a user equipment (UE) or UEs. includes steps of obtaining one or more handover parameters of the serving cell, estimating at least one quality of service (QoS) valuser equipment (UE) quality of service (QoS) of one or more applications at the at least one user equipment (UE) quality of service (QoS), the at least one quality of service valuser equipment (UE) quality of service (QoS) corresponds to one or more user equipment (UE) quality of service (QoS) key performance indicators (KPIs), providing a recommendation for traffic management for the at least one user equipment (UE) quality of service (QoS) based on the estimated at least one QoS valuser equipment (UE) quality of service (QoS), one or more user equipment (UE) quality of service (QoS) requirements and one or more handover parameters of the serving cell

According to a second aspect of the present disclosure, the wireless communication includes a serving cell, at least two non-serving cells, and at least one user equipment (UE) Quality of service (QoS) connected to the serving cell, the at least one user equipment (UE) quality of service (QoS) having a predefined priority valuser equipment (UE) quality of service (QoS).

According to a third aspect of the present disclosure, the recommendation provided to the at least one user equipment (UE) quality of service (QoS) further includes comparing one or more user equipment (UE) quality of service (QoS) QoS and handover parameters of the serving cell with the at least two non-serving cells in a wide area, identifying a non-serving cell capable of taking handover of the at least one user equipment (UE) quality of service (QoS) from the serving cell based on the comparison of the one or more handover parameters of the serving cell with the at least two non-serving cells and providing recommendation for the handover of the at least one user equipment (UE) quality of service (QoS), wherein the recommendation comprises at least one of the handover of the at least one user equipment (UE) quality of service (QoS) from the serving cell to an identified non-serving cell.

In accordance with an embodiment of the present disclosure, the at least two non-serving cells comprises one or more cells adjacent to the serving cell and one or more cells non-adjacent to the serving cell.

According to the fourth aspect of the disclosure, the recommendation provided to the at least one user equipment (UE) quality of service (QoS) comprises adjusting a QoS class valuser equipment (UE) quality of service (QoS) of the one or more application at the at least one user equipment (UE) quality of service (QoS), the QoS class valuser equipment (UE) quality of service (QoS) corresponds to a QoS required by an active bearer in the user equipment (UE) quality of service (QoS) to provide a service for the one or more application. In particular, the active bearer corresponds to a connection between the user equipment (UE) quality of service (QoS) and the packet data network gateway to provide the service.

In accordance with an embodiment of the present disclosure, the one or more handover parameters are based on at least one of a channel quality indicator, a quality of service class indicator, a received signal strength parameter, and an average load valuser equipment (UE) quality of service (QoS).

In accordance with an embodiment of the present disclosure, the recommendation further comprises dynamically performing handover of the at least one user equipment (UE) quality of service (QoS) from the serving cell to the identified non-serving cell based on the comparison of the one or more user equipment (UE) quality of service (QoS) QoS valuser equipment (UE) quality of service (QoS)s and handover parameters of the serving cell with the at least two non-serving cells in the wide area.

In accordance with an embodiment of the present disclosure, providing of recommendation further comprises comparing the one or more user equipment (UE) quality of service (QoS), QoS valuser equipment (UE) quality of service (QoS)s and handover parameters of the serving cell with the at least two non-serving cells at a predetermined interval.

According to the fifth aspect of the disclosure, the providing of recommendation to the at least one user equipment (UE) quality of service (QoS) further includes comparing the one or more user equipment (UE) quality of service (QoS) QoS valuser equipment (UE) quality of service (QoS)s and handover parameters of the serving cell with the at least two non-serving cells in the wide area, identifying a non-serving cell capable of taking handover of the at least one user equipment (UE) quality of service (QoS) from the serving cell based on the comparison of the one or more user equipment (UE) quality of service (QoS) QoS valuser equipment (UE) quality of service (QoS)s and handover parameters of the serving cell with the at least two non-serving cells and providing recommendation for QoS and handover of the at least one user equipment (UE) quality of service (QoS), wherein the recommendation comprises at least one of handover of the at least one user equipment (UE) quality of service (QoS) from the serving cell to an identified non-serving cell.

In accordance with an embodiment of the present disclosure, comparing the one or more user equipment (UE) quality of service (QoS), QoS and handover parameters of the serving cell and the at least two non-serving cells is performed in parallel. Particularly, the parallel checking comprises checking each of the at least two non-serving cells at the same time period.

According to the sixth aspect of the disclosure, the providing of recommendation for the at least one user equipment (UE) quality of service (QoS) further includes comparing one or more user equipment (UE) quality of service (QoS) QoS/QoE and handover parameters of the serving cell with the at least two non-serving cells in the wide area, identifying a non-serving cell capable of taking handover of the at least one user equipment (UE) quality of service (QoS) from the serving cell based on the comparison of the one or more user equipment (UE) quality of service (QoS) QoS and handover parameters of the serving cell with the at least two non-serving cells and providing recommendation for handover of the at least one user equipment (UE) quality of service (QoS), and the recommendation comprises at least one of handover of the at least one user equipment (UE) quality of service (QoS) from the serving cell to an identified non-serving cell.

In accordance with an embodiment of the present disclosure, the non-serving cell has the one or more user equipment (UE) quality of service (QoS) QoS/QoE and handover parameters in a predefined threshold range.

According to the seventh aspect of the disclosure, the providing of recommendation to the at least one user equipment (UE) quality of service (QoS) further includes comparing one or more user equipment (UE) quality of service (QoS) QoS/QoE and handover parameters of the serving cell with the at least two non-serving cells in the wide area, and identifying a non-serving cell capable of taking handover of the at least one user equipment (UE) quality of service (QoS) from the serving cell based on the comparison of the one or more user equipment (UE) quality of service (QoS) QoS and handover parameters of the serving cell with the at least two non-serving cells. The identified non-serving cell has a maximum quality of experience (QoE) valuser equipment (UE) quality of service (QoS) among the at least two non-serving cells in the wide area.

According to the eighth aspect of the disclosure, the method further includes identifying a QoE valuser equipment (UE) quality of service (QoS) required by at least one user equipment (UE) quality of service (QoS) for a second time period and providing the recommendation for the traffic management based on the identified QoE valuser equipment (UE) quality of service (QoS) for the second time interval.

In accordance with an embodiment of the present disclosure,the second time interval corresponds to succeeding time periods of a current time.

In accordance with an embodiment of the present disclosure, the method further comprises identifying a channel quality for each of the at least two non-serving cells, and the recommendation to the at least one user equipment (UE) quality of service (QoS) for the traffic management is based on comparison of the channel quality for each of the at least two non-serving cells.

In accordance with an embodiment of the present disclosure, the method further includes performing wide area checking of each of the at least two non-serving cells to provide handover recommendation for the at least one user equipment Quality of service (QoS).

In accordance with an embodiment of the present disclosure, wide area checking further checks non-serving cells in a predefined geographical area.

In accordance with an embodiment of the present disclosure, the radio access network (RAN) controller is a near real time radio access network (RAN) controller and/or a non-real time radio access network (RAN) controller.

According to the ninth aspect of the disclosure, the method leverages the wide area visibility at Radio Access network (RAN) Intelligent Controllers (RICs) spanning many cells to achieve the goal, improves the QoS or QoE of the specific user or the specific/priority user group by moving the UE to a different cell, or improve the QoS or QoE of the specific user and the specific/priority user group by providing dynamic handover from a service cell to another cell even without radio resource control (RRC) event triggers, or improve the QoS or QoE of the specific user and the specific/priority user group using a quality of service (QoS) nudging in a same cell or in a new cell. Moreover, the method provides a user targeted performance boost along with the traffic management for targeted users or user groups. Further, the method integrate and utilize perdition or estimation using AI/ML (artificial intelligence/machine learning) models based on various metrics from RAN, Core Network and internal or external application servers, wherein the prediction and/estimation includes CQI (channel quality indicator), user performance and mobility, application class and its QoE.

These and other aspects herein will be better appreciated and understood when considered in conjunction with the following description and the accompanying drawings. It should be understood, however, that the following descriptions are given by way of illustration and not of limitation. Many changes and modifications may be made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is an exemplary scenario illustrating a user equipment (UE) centric wide area optimization in accordance with an embodiment of the present disclosure;
Fig. 2 illustrates an example environment in which functions and operations of the UE centric WAO based traffic management application (UE-WAO-TM XApp) in accordance with an embodiment of the present disclosure;
Fig. 3 is a flow chart illustrating a traffic management method for handover and QoS nudging for the user equipment associated with a specific user and a specific/priority user group in accordance with an embodiment of the present disclosure.

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**
UE- user equipment
RAN - radio access network
QoS- Quality of service

RAN stands for radio access network. The radio access network (RAN) may be a part of a telecommunications system which may connect individual devices to other parts of a network through radio connections. Further, RAN may provide a connection of user equipment such as mobile phone or computer with the core network of the telecommunication systems. Furthermore, RAN may be an essential part of the access layer in the telecommunication systems which utilize base stations (such as eNB and gNB) for establishing radio connections.

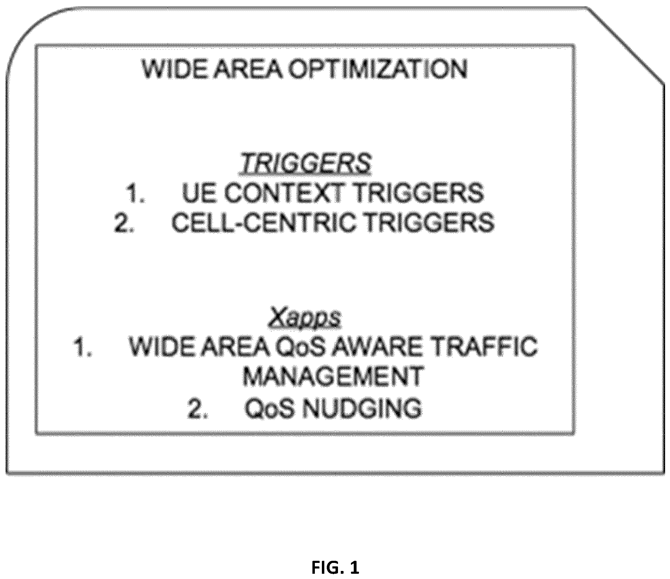

Fig. 1 is an exemplary scenario illustrating a user equipment (UE) centric wide area optimization in accordance with an embodiment of the present disclosure.a traffic management method by a radio access network (RAN) controller performing in a wireless communication system. The traffic management method includes steps of obtaining one or more handover parameters of the serving cell, estimating at least one quality of service (QoS) valuser equipment (Quality of service (QoS) of one or more applications at the at least one user equipment (Quality of service (QoS), the at least one quality of service valuser equipment (Quality of service (QoS) corresponds to one or more user equipment (Quality of service (QoS) key performance indicators (KPIs), providing a recommendation for traffic management for the at least one user equipment (Quality of service (QoS) based on the estimated at least one QoS valuser equipment (Quality of service (QoS), one or more user equipment (Quality of service (QoS) requirements and one or more handover parameters of the serving cell.

In accordance with an embodiment of the present disclosure, the wireless communication includes a serving cell, at least two non-serving cells, and at least one user equipment (user equipment (UE) Quality of service (QoS) connected to the serving cell, the at least one user equipment (Quality of service (QoS) having a predefined priority valuser equipment (Quality of service (QoS).

In accordance with an embodiment of the present disclosure, the radio access network (RAN) controller is a near real time radio access network (RAN) controller and/or a non-real time radio access network (RAN) controller. In particular, the radio access network (RAN) intelligent controller (RIC) (both near real time and non-real time) is capable of monitoring a wide area of cells and taking call of load optimization as per a current requirement.

With the UE specific wide area optimization, the optimization can be done for the UE associated with a specific user or the UE associated with a specific/priority user group. Further, the RIC determines/checks all the cells in a single view and requests the UE to move to a specific cell for optimization of the UE. The UE specific wide area optimization technique basically takes the call of larger optimization by using multiple cell groups. Further, the RIC can also check how it can provide optimized QoS to the UE using the concept of QoS nudging. The QoS nudging means, without moving the UE from a loaded cell to a different cell, the QoS is improved. It may be achieved by providing adjusting/compensating resources from a non-priority UE to a priority UE or by managing the QCI/5QI mapping of the UE flows in the LTE/5G network, where QoS Class Identifier (QCI) is a mechanism used in 3GPP Long Term Evolution (LTE) networks to ensure bearer traffic is allocated appropriate and 5QI (5G QoS Identifier) is a pointer to a set of QoS characteristics such as priority level, packet delay or packet error rate, etc.

Based on the above procedure, the optimization for multiple cells can be done in a single procedure.

In an implementation, the traffic management method may obtain one or more handover parameters of the serving cell and may estimate at least one quality of service (QoS) value of one or more applications at the at least one UE. The at least one quality of service value corresponds to one or more UE key performance indicators (KPIs). The traffic management method may further provide recommendations for traffic management for at least one UE based on the estimated at least one QoS value, one or more UE requirements and one or more handover parameters of the serving cell.

In particular, the traffic management method may provide recommendation to at least one UE by comparison of one or more UE QoS and handover parameters of the serving cell with the at least two non-serving cells in the wide area. The at least two non-serving cells may include one or more cells adjacent to the serving cell and one or more cells non-adjacent to the serving cell. The one or more handover parameters are based on at least one of a channel quality indicator (hereinafter referred to as "CQI") an indicator carrying the information on how good/bad the communication channel quality is, a quality of service (hereinafter referred to as "QoS") class indicator, a received signal strength parameter, an average load value, and the like.

In accordance with an embodiment of the present disclosure, the traffic management method may provide recommendation to at least one UE by identifying a non-serving cell capable of taking handover of the at least one UE from the serving cell based on the comparison of the one or more handover parameters of the serving cell with the at least two non-serving cells. Thereafter, the traffic management method may provide recommendation for the handover of the at least one UE. The recommendation may include at least one of the handover of the at least one UE from the serving cell to an identified non-serving cell and upgrading the at least one UE to a higher QoS class within the serving cell. The recommendation to at least one UE may be provided by adjusting a QoS class value of the one or more applications at the at least one UE. The QoS class value corresponds to a QoS required by an active bearer in the UE to provide a service for the one or more applications. The active bearer corresponds to connections between the UE and the packet data network gateway to provide the service.

In accordance with an alternate embodiment of the present disclosure, the traffic management method may dynamically performing handover of the at least one UE from the serving cell to the identified non-serving cell based on the comparison of the one or more UE QoS values and handover parameters of the serving cell with the at least two non-serving cells in the wide area. The traffic management may dynamically provide recommendation to the at least one UE, for the traffic management of the at least one UE based on the predetermined (or predefined) priority value of the specific user and the specific/priority user group.

In accordance with an alternate embodiment of the present disclosure, the traffic management method may compare the one or more UE QoS values (or one or more UE QoS/QoE) and handover parameters of the serving cell with the at least two non-serving cells at a predetermined interval in the wide area. The at least two non-serving cells may include the one or more cells adjacent to the serving cell and the one or more cells non-adjacent to the serving cell. The comparison of the one or more UE QoS (or one or more UE QoS/QoE) and handover parameters of the serving cell and the at least two non-serving cells is performed in parallel. The parallel checking may include checking each of the at least two non-serving cells at the same time period. Further, the non-serving cell capable of taking handover of the at least one UE from the serving cell based on the comparison of the one or more UE QoS values (or one or more UE QoS/QoE) and handover parameters of the serving cell with the at least two non-serving cells is identified. The non-serving cell may have the one or more handover parameters in a predefined threshold range. Furthermore, the identified non-serving cell has a maximum quality of experience (QoE) value among the at least two non-serving cells in the wide area.

The recommendation may be provided for QoS and handover of at least one UE. The recommendation may include at least one handover of the at least one UE from the serving cell to an identified non-serving cell. The non-serving cell may be identified from the at least two non-serving cells and the non-serving cell may have the one or more UE QoS/QoE and handover parameters in the predefined threshold range.

In accordance with an alternate embodiment of the present disclosure, the traffic management method may provide the recommendation to at least one UE by upgrading the at least one UE to the higher QoS class within the serving cell, if the at least one UE requires a guaranteed channel quality. Likewise, the traffic management method is used to support the QoS nudging within the serving cell, so that the traffic management method can be used to upgrade the at least one UE to a higher QoS class indicator (QCI)/a fifth generation (5G) quality indicator (5QI) class (i.e., guaranteed bit rate), Allocation/Retention Priority (ARP), Call admission control function, the at least one UE with higher ARP takes precedence during congestion. The ARP determines if there is a higher priority bearer, then at least one UE may be accepted in the identified non-serving cell.

Additionally, the traffic management method may identify a QoE value required by at least one UE, for a second time period. The second time period corresponds to the succeeding time period of a current time. Further, the traffic management method may provide the recommendation for the traffic management based on the identified QoE value for the second time interval. Furthermore, the traffic management method may identify a channel quality for each of the at least two non-serving cells. The recommendation to at least one user equipment for the traffic management (load balancing) is provided based on comparison of the channel quality for each of the at least two non-serving cells. Moreover, the traffic management method may perform wide area checking of each of the at least two non-serving cells to provide handover recommendation for the at least one UE. The wide area checking provides checking of non-serving cells in a predefined geographical area.

In an implementation, the traffic management method may provide dynamic handover of at least one UE to the identified non-serving cell even without radio resource control (RRC) event triggers (without relying on A3 events) or due cell level threshold violations. The A3 event is triggered when the identified non-serving cell becomes better than the serving cell by an offset. The serving cell corresponds to the primary serving cell of either a Master Cell Group (MCG) or Secondary Cell Group (SCG)). The offset can be either positive or negative.

In an example, if a first UE in the special group has quality degradation then the traffic management method can be used to identify the nearby cells and try to handover the first UE in a QoS aware manner.

In accordance with an alternate embodiment of the present disclosure, the traffic management method may be used for targeted user groups. The traffic management method includes receiving a set of inputs. The set of inputs may be, for example but not limited to, a UE identifier (UE-ID), a Network Slice Selection Assistance Information (NSSAI), a Reference Signal Receive Power (hereinafter referred to as "RSRP")/Reference Signal Receive Quality (hereinafter referred to as "RSRQ") for the serving cell and the at least two non-serving cells, serving cell CQI in a periodic manner, user performance requirements (e.g., QCI/5QI), current user performance in a periodic manner, physical resource block (PRB) utilization for all cells for all QoS classes in a periodic manner (not user specific). The RSRP is defined as the linear average over the power contributions (in [W]) of the resource elements that carry cell-specific reference signals within considered measurement frequency bandwidth. RSRP may be the power of the LTE Reference Signals spread over the full bandwidth and narrowband.

Further, the traffic management method includes processing the set of inputs and providing an output. The output can be Quality of Experience (QoE) prediction and target cell for each user in premium/serving groups. For each premium/special group user, the channel quality indicator (CQI) and QoE predictors (based on Artificial intelligence (Al)/machine learning (ML) models) are used for each of the at least two non-serving cells.

The WAO method may be used to utilize resources of other UE's in the serving cell for boosting performance of the priority UE.

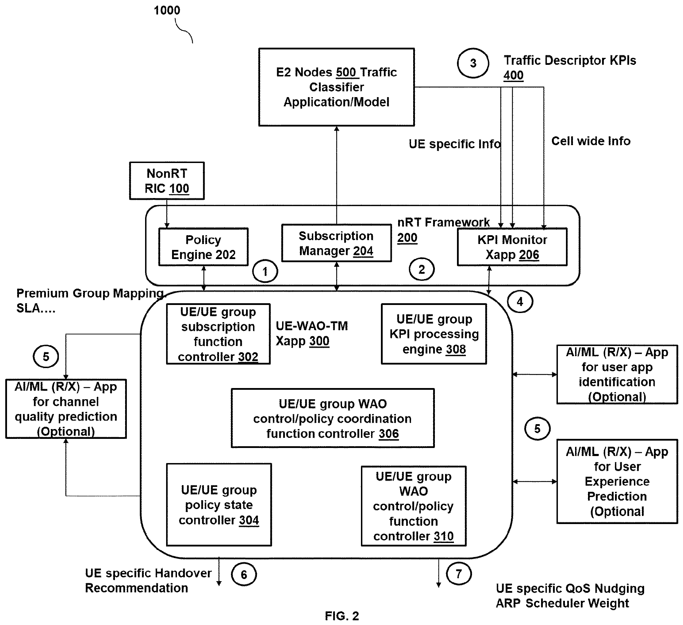

In accordance with an alternate embodiment of the present disclosure, the traffic management method may be used to interact with the UE centric wide area optimization based traffic management application (herein after referred to as "UE-WAO-TM XApp "300" as shown FIG. 2) for updating a medium access control (MAC) scheduler or the DU by using the set of input. The set of input may be, for example, but not limited to a user group, the RSRP for the serving cell, the RSRQ for the serving cell, Channel Quality Indicator (CQI) for the serving cell in a periodic manner, user performance requirements, current user performance on a periodic basic, and PRB utilization for all cells for all QoS classes on a periodic basis. Further, the traffic management method may be used to process the input and provides an output (i.e., signal to MAC scheduler for boosting user performance, reconfiguration of scheduler policies/parameters, re-mapping of QoS flow to Dedicated Radio Bearer (DRB) with higher QCI/5QI class/ARP.

Fig. 2 illustrates an example environment in which functions and operations of the UE centric WAO based traffic management application (UE-WAO-TM XApp) in accordance with an embodiment of the present disclosure. The UE centric WAO based traffic management application 300 (hereinafter referred to as "UE-WAO-TM XApp "300") with various entities are explained.

The environment 1000 includes a non-RT-RIC 100, a near-RT (nRT) Framework 200, the UE-WAO-TM XApp 300, traffic descriptor KPIs 400, and E2 Nodes 500. The UE-WAO-TM XApp 300 is operated with the non-RT-RIC 100, the nRT Framework 200, the traffic descriptor KPIs 400, and the E2 Nodes 500. The E2 nodes 500 are control unit (hereinafter referred to as "CU") and distribution/distributed unit (hereinafter referred to as "DU"). The CU and DU can provide RAN (Radio Access Network) controlling and data plane functionalities for multiple RATs.

Particularly, the near real time RAN Intelligent Controller (near RT RIC) is a logical function that enables near-real-time control and optimization of O-RAN elements and resources via fine-grained data collection and actions over the E2 interface. The Non-Real Time Radio Intelligent Controller (non-RT-RIC) is a logical function that enables non-real-time control and optimization of RAN elements and resources, AI/ML workflow including model training and updates, and policy-based guidance of applications/features in near-RT RIC. It is a part of the Service Management and Orchestration Framework and communicates to the near-RT RIC using an A1 interface.

Non-RT control functionality (> 1s) and near-Real Time (near-RT) control functions (< 1s) are decoupled in the RIC. The Non-RT functions include service and policy management, RAN analytics and model-training for some of the near-RT RIC functionality, and non-RT RIC optimization. Further, O-CU is O-RAN Central Unit, which is a logical node hosting RRC (Radio Resource Control) protocol, SDAP (Service Data Adaptation Protocol) and PDCP (Packet Data Convergence Protocol). O-CU-CP is O-RAN Central Unit - Control Plane, which is a logical node hosting the RRC and the control plane part of the PDCP protocol. The O-CU-UP is O-RAN Central Unit - User Plane, which is a logical node hosting the user plane part of the PDCP protocol and the SDAP protocol.

The O-DU is an O-RAN Distributed Unit, which is a logical node hosting RLC/MAC/High-PHY layers based on a lower layer functional split. The O-RU is O-RAN Radio Unit, which is a logical node hosting Low-PHY layer and RF processing based on a lower layer functional split. This is similar to 3GPP's "TRP" or "RRH" but more specific in including the Low-PHY layer (FFT/iFFT, PRACH extraction). An O1 interface is an interface between management entities in Service Management and Orchestration Framework and O-RAN managed elements, for operation and management, by which FCAPS (fault, configuration, accounting, performance, security) management, Software management, File management shall be achieved. The xAPP is an independent software plug-in to the Near-RT RIC platform to provide functional extensibility to the RAN by third parties. The near-RT RIC controller can be provided with different functionalities by using programmable modules as xAPPs, from different operators and vendors.

The nRT Framework 200 includes a policy engine 202, a subscription manager 204, and a KPI monitor XApp 206 that monitors key performance associated with the UE-WAO-TM XApp 300. The subscription manager 204 supports the subscription function of the UE-WAO-TM XApp 300, and a KPI monitor XApp 206. The UE-WAO-TM XApp 300 includes a UE/UE group subscription function controller 302, a UE/UE group policy state controller 304, a UE/UE group WAO control/policy coordination function controller 306, a UE/UE group KPI processing engine 308, and a UE/UE group WAO control/policy function controller 310. The controller includes various logics and programs to perform various tasks based on the requirement.

Further, the UE-WAO-TM XApp 300 also operates with the AI/ML model and an AI/ML traffic classification model. The AI/ML model is used for channel quality prediction, user application identification, and user experience prediction.

The AI/ML traffic classification model can be located in the near-RT-RIC, the non-RT-RIC 100 or in the E2 nodes 500 depending on the XApp control loop latency requirement. The AI/ML traffic classification model can be an RApp or XApp, hence executed as part of the non-RT-RIC 100 or near-RT-RIC. The RApp is used for the non-RT-RIC 100 and the XApp is used for near-RT-RIC. The RApp and XApp are applications for performing various functions in an open radio access network (RAN) architecture.

The UE-WAO-TM XApp 300 performs optimized traffic management leveraging the wide area visibility at RICs. Alternatively, the UE-WAO-TM XApp 300 obtains traffic management information (e.g., UE Ids, service-level agreement (SLA) from the policy engine 202 for the designated groups (e.g., a premium group) of users to be managed.

The UE-WAO-TM XApp 300 subscribes to the required measurements from the E2 nodes 500. The subscription is related to user specific measurements like RSRP/RSRQ from the serving cell and the at least two non-serving cells, current uplink/downlink (UL/DL) user plane performance metrics (e.g., throughput and latency), cell wide measurements like UL/DL PRB utilization by QCI/5QI classes, where performance metrics includes estimated QoS/QoE and handover parameters.

Particularly, the UE-WAO-TM XApp 300 is configured to provide recommendations to the E2 nodes 500 that may include handover for a user to the at least two non-serving cells, the QoS nudging for the at least one UE (e.g., modification in ARP/QCI(5QI) level(s) and/or MAC scheduling parameters.

Moreover, the UE-WAO-TM XApp 300 is used with the AI/ML application for predicting the CQI using information like RSRP/RSRQ, user plane performance and user mobility and for identifying current user application and its QoE predictions (both currently and after the recommended control action) using information like user eRAB/DRB ID and user plane traffic profile and performance.

At step 1, the non-RT-RIC 100 sets one or more policies in the UE-WAO-TM XApp 300. The one or more policy includes the UE-ID or UE group (i.e., NSSAI) that needs to be monitored, a service type, and an SLA requirement in terms of the QoS performance targets. The service type can be, for example, but not limited to an application level descriptor, 5 tuples or the like. The QoS performance targets can be, for example, but not limited to QCI/5QI, throughput, latency, PLR, or the like.

At step 2, the UE-WAO-TM XApp 300 creates the policy states for each UE or UE group in a UE/UE-Group policy state function using a UE/UE-Group policy state function controller 304.

At step 3, depending on the policy requirements, the UE/UE group WAO control/policy function subscribes to KPIs periodically or requests a report based on satisfaction of certain trigger conditions in the E2 nodes 500 through a subscription function using a UE/UE group WAO control/policy function controller 310 and the UE/UE group KPI processing engine 308.

The UE level metrics may include RRC KPIs that include RSRP/RSRQ/SINR and RRC event reports and KPIs from a Centralized unit user plane (CU-UP) and distributed unit (DU) level, which include performance related ones such as DRB level DL/UL and UL/DL Packet Data Convergence Protocol (PDCP) throughput, DL/UL DRB level and PDCP level packet loss, DL/UL DRB level and PDCP packet latency.

The cell level KPIs include aggregate UL/DL cell level throughput/packet loss/latency metrics, also per QCI/5QI level aggregate throughput/loss/latency metrics, and maximum number of UE's per QCI/5QI etc.

The traffic descriptor KPIs 400 include metrics are used to identify a particular flow belonging to a given service. The traffic descriptor KPIs 400 may include application level information, 5 tuple information and associated DRB-ID (if available). The application level information can be, for example, but not limited to a UE-ID, Hash-IDs, packet length, inter-arrival interval, and 5QI/CQI etc.

In case, if the UE-ID/DRB-ID is not determined yet, then the traffic descriptor KPIs 400 is used by the application prediction function in the non-RT-RIC 100 detects the services of interest based on the UE policy, and obtains the DRB-ID. Else, the policies can be set in the traffic classification function in the E2 nodes 500 to determine the UE/DRB-ID, which can be used by the UE-WAO-TM XApp 300 to monitor flows belonging to UEs of interest.

At step 4, the WAO function, based on the policy requirements, may also issue certain UE/UE-group related policy procedures along with event triggers to enforce QCI/5QI performance requirements at the CU-UP and DU level using the UE/UE group WAO control/policy function controller 310.

The steps 1-4 described herein may have fewer or additional steps or states and the steps or states may be performed in a different order or same order. Also, not all the steps 1-4 are needed to be processed essentially. The method may skip one or more steps.

At step 5, the subscribed KPIs are aggregated and processed by a KPI-Mon framework function from which it is either pushed to or pulled by the UE KPI processing engine (not shown). Further, in step 5 the AI/ML enabled RApps or xApps are used to provide inputs of channel quality prediction, the user application identification, and the user experience prediction to the WAO XApp.

At step 6, a subset of KPIs is used by the control/policy algorithm function to invoke prediction functions for the service being monitored using the UE/UE group WAO control/policy function controller 310. The traffic descriptors can be used as input by the AI/ML application predictor in the non-RT-RIC 100 to map to the services to specific DRBs. Further, the traffic predictor in the E2 nodes 500 can be employed to predict the service type and map to the DRB ID in the E2 nodes 500. Further, the prediction function may be called once during the UE-WAO-TM XApp 300 initialization procedure or whenever there is a policy change to monitor new services.

The WAO control/policy function uses the KPI and the DRB information to monitor the SLA requirements, and if the WAO control/policy function observes QoS degradation for the UEs or the UE-group, it considers certain control actions (Handover or QoS Policies). Further, the performance prediction functions are invoked for evaluating the impact of the control actions of the channel quality.

For each of the at least one UE, the AI/ML channel quality predictor enables channel prediction to other target cells using the at least one UE related identified non-serving cell power related KPIs and mobility statistics. The channel prediction is used by the algorithm function to determine the resource requirement based on SLA requirements, based on which the target cell(s) can be predicted.

Further, the performance prediction function uses UE's performance KPIs along with the considered control actions (handover to the identified non-serving cell or QoS class level changes) to estimate the change in the user satisfaction level. Based on the feedback from the QoE prediction function, the Algorithm function then determines the set of RAN function related control actions to be invoked in the E2 nodes 500.

At step 7, the UE coordination function is used by the UE/UE group WAO control/policy coordination function controller 306 to coordinate the input and output responses from the above discussed prediction components.

In accordance with an embodiment of the present disclosure, at least one UE may be, for example, but not limited to a cellular phone, a smart phone, a Personal Digital Assistant (PDA), a wireless modem, a tablet computer, a laptop computer, a Universal Serial Bus (USB) dongle, an Internet of Things (IoT), a virtual reality device, an immersive system, or the like.

In accordance with an embodiment of the present disclosure, a processor is configured to execute instructions stored in a memory and to perform various processes. A communicator is configured for communicating internally between internal hardware components and with external devices via one or more networks. The memory also stores instructions to be executed by the processor.

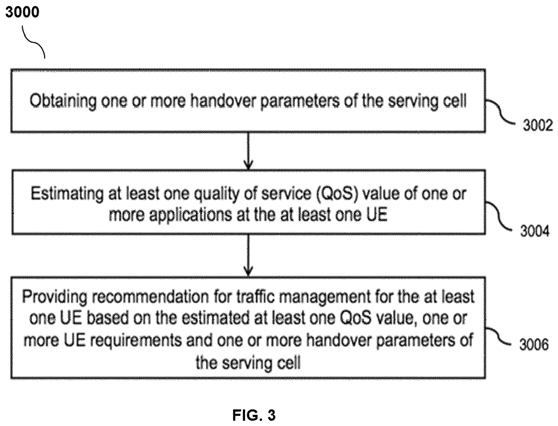

Fig. 3 is a flow chart illustrating a traffic management method for handover and QoS nudging for the user equipment associated with a specific user and a specific/priority user group in accordance with an embodiment of the present disclosure.

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DETAILED DESCRIPTION OF THE DISCLOSURE

The principles of the present disclosure and their advantages are best understood by referring to Fig. 1 to Fig. 3. In the following detailed description numerous specific details are set forth in order to provide a thorough understanding of the embodiment of disclosure as illustrative or exemplary embodiments of the disclosure, specific embodiments in which the disclosure may be practiced are described in sufficient detail to enable those skilled in the art to practice the disclosed embodiments. However, it will be obvious to a person skilled in the art that the embodiments of the disclosure may be practiced with or without these specific details. In other instances, well known methods, procedures and components have not been described in detail so as not to unnecessarily obscure aspects of the embodiments of the disclosure.

The following detailed description is, therefore, not to be taken in a limiting sense, and the scope of the present disclosure is defined by the appended claims and equivalents thereof. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. References within the specification to "one embodiment," "an embodiment," "embodiments," or "one or more embodiments" are intended to indicate that a particular feature, structure, or characteristic described in connection with the embodiment is included in at least one embodiment of the present disclosure.

Although the terms first, second, etc. may be used herein to describe various elements, these elements should not be limited by these terms. These terms are generally only used to distinguish one element from another and do not denote any order, ranking, quantity, or importance, but rather are used to distinguish one element from another. Further, the terms "a" and "an" herein do not denote a limitation of quantity, but rather denote the presence of at least one of the referenced items.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one ofY, or at least one of Z to each be present.

**Following terms shall apply throughout the present disclosure:**
UE- user equipment
RAN - radio access network
QoS- Quality of service
RAN stands for radio access network. The radio access network (RAN) may be a part of a telecommunications system which may connect individual devices to other parts of a network through radio connections. Further, RAN may provide a connection of user equipment such as mobile phone or computer with the core network of the telecommunication systems. Furthermore, RAN may be an essential part of the access layer in the telecommunication systems which utilize base stations (such as eNB and gNB) for establishing radio connections.

Fig. 1 is an exemplary scenario illustrating a user equipment (UE) centric wide area optimization in accordance with an embodiment of the present disclosure.

Fig. 2 illustrates an example environment in which functions and operations of the UE centric WAO based traffic management application (UE-WAO-TM XApp) in accordance with an embodiment of the present disclosure;

Fig. 3 is a flow chart illustrating a traffic management method for handover and QoS nudging for the user equipment associated with a specific user and a specific/priority user group in accordance with an embodiment of the present disclosure.

It may be noted that in order to explain the method steps of the flowchart 3000, references will be made to the elements explained in Fig. 1 and Fig. 2.

The flowchart 3000 starts at step 3002. At step 3002, the traffic of the one or more handover parameters of the serving cell are obtained.

At step 3004, the at least one quality of service (QoS) value of the one or more applications at the at least one UE is estimated. The at least one quality of service value corresponds to the one or more UE key performance indicators (KPIs).

At step 3006, recommendation for traffic management for at least one UE is provided based on the estimated at least one QoS value, one or more UE requirements and one or more handover parameters of the serving cell.

It may be noted that the flowchart 300 is explained to have above stated process steps, however, those skilled in the art would appreciate that the flowchart 900 may have more/less number of process steps which may enable all the above stated embodiments of the present disclosure.

Overall, the present disclosure provides advantages such as achieving more scalability using AI/ML models and efficient usage of cell resources in the wide area. Moreover, the user centric approach for QoS management is customizable to premium/special user groups. Furthermore, with the technique of the present disclosure, no need to depend on A3 event triggering for handover or QoS nudging.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only byway of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

The results of the disclosed methods may be stored in any type of computer data repository, such as relational databases and flat file systems that use volatile and/or nonvolatile memory (e.g., magnetic disk storage, optical storage, EEPROM and/or solid state RAM). The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array

(FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one ofY, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A traffic management method performed by a radio access network (RAN) controller in a wireless communication system, **characterized in that** steps of:
obtaining one or more handover parameters of the serving cell;
estimating at least one quality of service (Quality of service (QoS)) value of one or more applications at the at least one UE, the at least one quality of service value corresponds to one or more UE key performance indicators (KPIs);
providing a recommendation for traffic management for the at least one UE based on the estimated at least one Quality of service (QoS) value, one or more UE requirements and one or more handover parameters of the serving cell; and wherein the wireless communication system comprising a serving cell, at least two non-serving cells, and at least one user equipment (UE) connected to the serving cell, the at least one UE having a predefined priority value.

2. The traffic management method of claim 1, wherein the recommendation provided to the at least one UE further comprising
comparing one or more UE Quality of service (QoS) and handover parameters of the serving cell with the at least two non-serving cells in a wide area;
identifying a non-serving cell capable of taking handover of the at least one UE from the serving cell based on the comparison of the one or more handover parameters of the serving cell with the at least two non-serving cells; and
providing recommendation for the handover of the at least one UE, wherein the recommendation comprises at least one of the handover of the at least one UE from the serving cell to an identified non-serving cell.

3. The traffic management method of claim 1, wherein the at least two non-serving cells comprises one or more cells adjacent to the serving cell and one or more cells non-adjacent to the serving cell.

4. The traffic management method of claim 1, wherein the recommendation provided to the at least one UE comprises adjusting a Quality of service (QoS) class value of the one or more application at the at least one UE, the Quality of service (QoS) class value corresponds to a Quality of service (QoS) required by an active bearer in the UE to provide a service for the one or more application.

5. The traffic management method of claim 4, wherein the active bearer corresponds to a connection between the UE and the packet data network gateway to provide the service.

6. The traffic management method of claim 1, wherein the recommendation further comprises dynamically performing handover of the at least one UE from the serving cell to the identified non-serving cell based on the comparison of the one or more UE Quality of service (QoS) values and handover parameters of the serving cell with the at least two non-serving cells in the wide area.

7. The traffic management method of claim 1, wherein the one or more handover parameters are based on at least one of a channel quality indicator, a quality of service class indicator, a received signal strength parameter, and an average load value.

8. The traffic management method of claim 1, wherein the recommendation further comprises comparing the one or more UE, Quality of service (QoS) values and handover parameters of the serving cell with the at least two non-serving cells at a predetermined interval.

9. The traffic management method of claim 1, wherein the recommendation to the at least one UE further comprising:
comparing the one or more UE Quality of service (QoS) values and handover parameters of the serving cell with the at least two non-serving cells in the wide area;
identifying a non-serving cell capable of taking handover of the at least one UE from the serving cell based on the comparison of the one or more UE Quality of service (QoS) values and handover parameters of the serving cell with the at least two non-serving cells; and
providing recommendation for Quality of service (QoS) and handover of the at least one UE, wherein the recommendation comprises at least one of handover of the at least one UE from the serving cell to an identified non-serving cell,
wherein comparing the one or more UE, Quality of service (QoS) and handover parameters of the serving cell and the at least two non-serving cells is performed in parallel.

10. The traffic management method of claim 9, wherein a parallel checking comprises checking each of the at least two non-serving cells at a same time period.

11. The traffic management method of claim 1, wherein the providing of recommendation for the at least one UE further comprising:
comparing one or more UE Quality of service (QoS)/QoE and handover parameters of the serving cell with the at least two non-serving cells in the wide area;
identifying a non-serving cell capable of taking handover of the at least one UE from the serving cell based on the comparison of the one or more UE Quality of service (QoS) and handover parameters of the serving cell with the at least two non-serving cells; and
providing recommendation for handover of the at least one UE, and the recommendation comprises at least one of handover of the at least one UE from the serving cell to an identified non-serving cell,
wherein the non-serving cell is identified from the at least two non-serving cells.

12. The traffic management method of claim 11, wherein the non-serving cell has the one or more UE Quality of service (QoS)/QoE and handover parameters in a predefined threshold range.

13. The traffic management method of claim 1, wherein the providing of recommendation to the at least one UE further comprising:
comparing one or more UE Quality of service (QoS)/QoE and handover parameters of the serving cell with the at least two non-serving cells in the wide area;
identifying a non-serving cell capable of taking handover of the at least one UE from the serving cell based on the comparison of the one or more UE Quality of service (QoS) and handover parameters of the serving cell with the at least two non-serving cells.

14. The traffic management method of claim 13, wherein an identified non-serving cell has a maximum quality of experience (QoE) value among the at least two non-serving cells in the wide area.

15. The traffic management method of claim 1, wherein the method further comprising:
identifying a QoE value required by the at least one UE for a second time period; and
providing the recommendation for the traffic management based on the identified QoE value for the second time interval.
